**Europäisches Patentamt**

**European Patent Office**

**Office européen des brevets**

(19)

(11) Veröffentlichungsnummer : **0 423 458 B1**

(12) # EUROPÄISCHE PATENTSCHRIFT

(45) Veröffentlichungstag der Patentschrift :
**16.12.92 Patentblatt 92/51**

(51) Int. Cl.⁵ : **B29C 47/10, B29C 47/92**

(21) Anmeldenummer : **90115863.4**

(22) Anmeldetag : **18.08.90**

(54) **Verfahren zum Konstanthalten der Anstellkraft eines Abstreifmessers an einer Speisewalze eines Extruders.**

(30) Priorität : **18.10.89 DE 3934734**

(43) Veröffentlichungstag der Anmeldung :
**24.04.91 Patentblatt 91/17**

(45) Bekanntmachung des Hinweises auf die
Patenterteilung :
**16.12.92 Patentblatt 92/51**

(84) Benannte Vertragsstaaten :
**AT CH DE FR GB IT LI NL SE**

(56) Entgegenhaltungen :
**DE-A- 3 423 775**
**DE-C- 3 934 734**
**GB-A- 536 421**
**GB-A- 960 575**
**US-A- 1 422 561**

(73) Patentinhaber : **HERMANN BERSTORFF**
**Maschinenbau GmbH**
**An der Breiten Wiese 3/5**
**W-3000 Hannover 61 (DE)**

(72) Erfinder : **Capelle, Gerd, Dipl.-Ing.**
**Hainhäuserweg 55**
**W-3012 Langenhagen 6 (DE)**

EP 0 423 458 B1

**Beschreibung**

Die Erfindung betrifft ein Verfahren der Gattung, wie beschrieben im Oberbegriff des Patentanspruchs 1 und eine Vorrichtung zur Durchführung des Verfahrens, wie beschrieben im Oberbegriff des Patentanspruchs 4.

Aus der GB-PS 960 575 ist ein Extruder für die Verarbeitung von Kautschuk bekannt mit einer Speisewalze, die, um einen guten Einzug von z. B. Kautschukstreifen oder -stücke zu erreichen, mit der Extruderschnecke zusammenwirkt.

Durch den Einzugsvorgang haftet der Kautschuk an dem glatten Mantel der Speisewalze. Die Speisewalze wird etwa mit der gleichen Umfangsgeschwindigkeit der Schnecke angetrieben.

Um sicherzustellen, daß der an der Speisewalze anhaftende Kautschuk in dem Einzugsabschnitt verbleibt, wird ein Abstreifmesser gegen den Mantel der Speisewalze über die gesamte Walzenmantellänge mit definiertem Spalt von 0,05 bis 0,1 mm angestellt.

Der Abschabevorgang des Abstreifmessers gegen den Speisewalzenmantel funktioniert nur so lange, wie die Spitze des Abstreifmessers nicht verschlissen ist, bzw. das Spaltmaß konstant gehalten werden kann.

Zeigen sich an der Messerspitze Verschleißerscheinungen, muß eine Nachstellung oder ein Austausch des Abstreifmessers vorgenommen werden. Da das Abstreifmesser in dem Extrudergehäuse an der Innenseite des Speisewalzenmantels angeordnet ist, bereitet die Nachstellung des Abstreifmessers erhebliche Schwierigkeiten.

Wenn das Abstreifmesser ungenügend gegen den Speisewalzenmantel einjustiert wird, tritt Kautschuk aus dem Extruder aus, an der Seite, an der die Speisewalze angeordnet ist. Bei einem Extruder mit einer Schnecke von 300 mm und einer Speisewalze von 400 mm Durchmesser kann bei ungenügender Anstreifarbeit des Messers bis zu 100 kg pro Stunde an der Speisewalzenseite aus dem Extruder austreten. Um diese Kautschukverluste zu vermeiden, muß daher eine Bedienungsperson sehr häufig manuell die Nachstellung des Abstreifmessers vornehmen.

Da der Einzug der Kautschukstreifen oder -stücke ständig wechselnde Separationskräfte zwischen Schnecke und Speisewalze erzeugt, ist auch der Kautschukdruck, der auf das Abstreifmesser einwirkt, ständig unterschiedlich.

Wenn die Bedienungsperson das Abstreifmesser mit zu geringem Spalt gegen den Speisewalzenmantel angestellt hat und die Separationskraft, d. h. der Kautschukdruck im Einzugsbereich noch zunimmt, wird der Druck auf das Abstreifmesser überproportional hoch. Durch diese Erscheinung steigt der Verschleiß des Abstreifmessers erheblich.

Es ist die Aufgabe der vorliegenden Erfindung, ein Verfahren und eine Vorrichtung vorzuschlagen, um die geschilderten Nachteile zu vermeiden. Insbesondere soll mittels des erfindungsgemäßen Verfahrens erreicht werden, daß der Messerverschleiß und der Verlust an Kautschukmischung stark verringert bzw. fast vermieden wird, auch bei ständig wechselnden Separationskräften zwischen der Schnecke und der Speisewalze.

Die Aufgabe wird bei einem Verfahren der genannten Art durch die im kennzeichnenden Teil des ersten Patentanspruchs stehenden Merkmale gelöst.

Eine für das Verfahren besonders geeignete Vorrichtung wird mit ihren kennzeichnenden Merkmalen in Patentanspruch 4 beschrieben.

Durch eine permanente Messung der Kraft zwischen der Schnecke und der Speisewalze und eine entsprechende Auswertung der Meßergebnisse für die Einstellung einer konstanten Anstellkraft des Abstreifmessers gegen den Speisewalzenmantel werden folgende Vorteile erreicht:

- das Abstreifmesser wird völlig unabhängig von dem Kautschukdruck im Einzugsbereich der Schnecke mit einer ständig gleichbleibenden Kraft gegen den Speisewalzenmantel gepreßt, es verbleibt somit kein - wie beim fix justierten Messer - mechanisch erforderlicher Spalt zwischen Abstreifmesser und Speisewalze,
- es entsteht wesentlich weniger, bzw. fast kein Verschleiß an dem Abstreifmesser,
- der Verlust von austretenem Kautschuk an der Speisewalzenseite des Extruders ist vernachlässigbar gering,
- es wird eine Bedienungsperson für die Nachjustierarbeiten des Abstreifmessers eingespart.

In vorteilhafter Weise wird die durch die Druckmeßdose gemessene Materialspaltkraft als Wert erfaßt und eine entsprechend geringere Gegenkraft (Hydraulikdruck) wird auf die Druckseite eines Hydraulikzylinders für die axiale Bewegung des Abstreifmessers gegeben, so daß das Abstreifmesser ständig mit gleicher Kraft und Spalt Null gegen den Mantel der Speisewalze gefahren wird.

Der auf den Hydraulikzylinder wirkende Druck kann in vorteilhafter Weise durch ein Proportionalventil oder auch durch ein entsprechend programmiertes Steuergeräte gesteuert werden. Von Bedeutung ist, daß jeweils entsprechend der gemessenen Spaltkraft, die proportional auf die Fläche des Abstreifmessers wirkt, von dem Proportionalventil oder einer anderen Steuereinrichtung, eine Gegenkraft auf die Verfahreinrichtung des Abstreifmessers gegeben wird, die sicherstellt, daß das Messer ständig mit konstanter Kraft gegen den Mantel des Abstreifmessers gepreßt wird.

In vorteilhafter Weise kann die Einrichtung zum Konstanthalten des Anpreßdruckes des Abstreifmessers gegen den Speisewalzenmantel durch einen Hydraulik- oder Pneumatikzylinder, durch einen Spindeltrieb oder auch durch ansteuerbare Elektromagneten gebildet werden.

Ein Ausführungsbeispiel einer Vorrichtung, die sich besonders für die Durchführung des erfindungsgemäßen Verfahrens eignet, wird in der Zeichnung gezeigt und nachfolgend näher erläutert.

Es zeigen:

Fig. 1 einen Querschnitt durch ein Einzugsteil eines Extruders und einer hydraulischen Verstellung des Abstreifmessers.

Fig. 2 einen Querschnitt gemäß Fig. 1, jedoch mit einem Spindeltrieb für die Messerverstellung.

Fig. 3 einen Querschnitt gemäß Fig. 1, jedoch mit einem Magneten für die Messerverstellung.

Fig. 4 einen Hydraulikplan.

Fig. 5 eine graphische Darstellung der entstehenden Kräfte.

In dem im Querschnitt dargestellten Extrudergehäuse 3 ist eine Extruderschnecke 1 angeordnet, die im Einzugsteil mit einer Speisewalze 2 zusammenwirkt. Oberhalb der Schnecke 1 befindet sich die Materialeinspeiseöffnung 4.

Die Speisewalze 2 ist mit ihrem Lager 32 in einem Speisewalzengehäuse 6 angeordnet, welches über ein Scharnier 5 mit dem Extrudergehäuse 3 verbunden ist. Die Speisewalze 2 wird über einen nicht näher beschriebenen Antrieb, der mit dem Antriebsritzel 33 zusammenwirkt, angetrieben.

Unterhalb der Speisewalze 2 ist eine Aussparung in dem Gehäuse 6 eingebracht, für die Aufnahme eines Abstreifmessers 7, welches in Richtung des Pfeiles 8 mittels des Hydraulikzylinders 9 gegen den Walzenmantel verfahrbar ausgebildet ist, wodurch der Abstand zwischen dem Mantel der Speisewalze 2 und der Messerspitze eingestellt wird.

Am oberen Teil des Gehäuses 3 ist ein Zuganker 11 in eine Bohrung 12 des Gehäuses eingeschraubt. Der Zuganker 11 verbindet die Aufnahmeeinrichtung 13 für die Speisewalze 2 mit dem oberen Teil 3 des Extrudergehäuses. Auf dem Zuganker 11 ist eine mittels einer Mutter 15 auf dem Zuganker gehaltene Kraftmeßdose 14 angeordnet.

Der Zuganker 11 verbindet die Speisewalzenaufnahme 13 mit dem Extrudergehäuse 3.

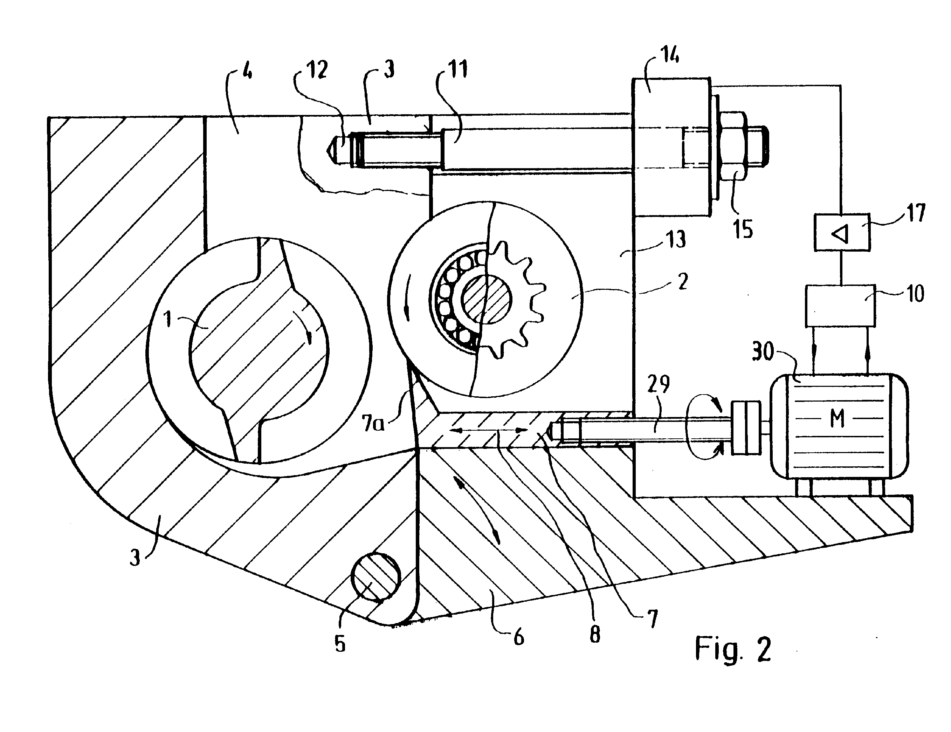

In Fig. 2 wird ein, aus einer Spindel 29 mit einem Motor 30 zusammenwirkender Spindeltrieb gezeigt für die Verstellung des parallelen Abstandes des Abstreifmessers zum Mantel der Speisewalze 2.

Die durch die Kraftmeßdose 14 gemessene Kraft wird durch den Verstärker 17 erfaßt und entsprechend an das Steuergerät 10 gegeben. Aufgrund dessen erzeugt dann der Motor 30 ein Drehmoment, das über den Spindeltrieb 29 das Abstreifmesser 7 mit einer konstanten Kraft, z.B. 10 kN, gegen den Mantel der Speisewalze 2 fährt.

Wenn sich dann die Spaltkraft, z.B. auf 70 kN, erhöht, würde auch die Kraft des Messers gegen die Speisewalze größer. Aufgrund dessen veranlaßt das Steuergerät den Motor zur Änderung der Drehmomentenrichtung, um über den Spindeltrieb die Kraft zwischen Messer und Walze auf den konstanten Wert von 10 kN zu halten.

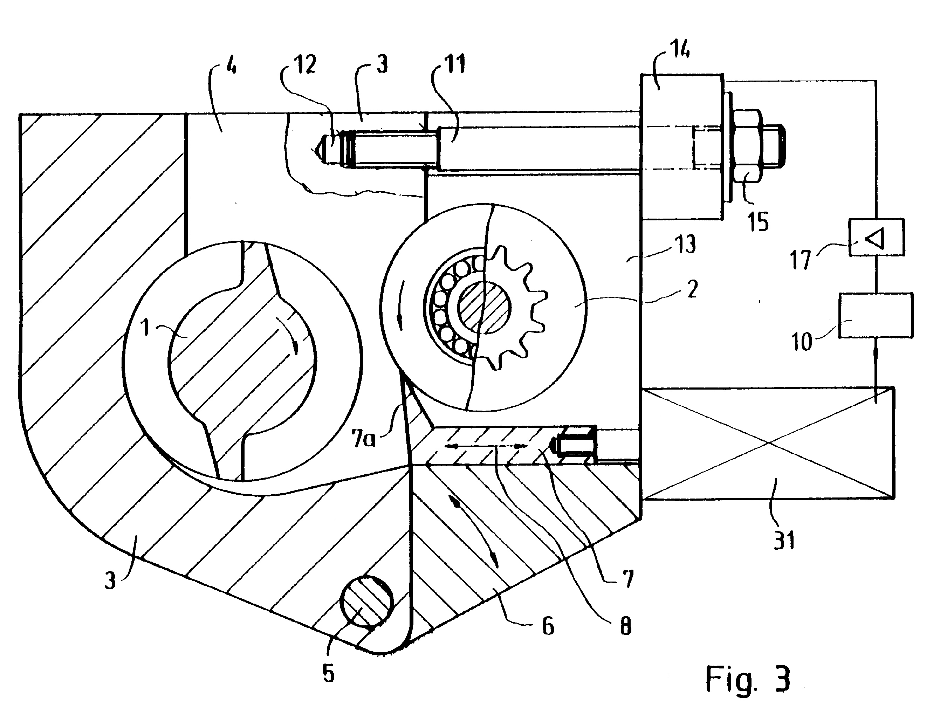

In Fig. 3 wird ein Elektromagnet 31 gezeigt, der von dem Steuergerät 10 ständig derart gesteuert wird, daß das mit dem Magneten 31 verbundene Abstreifmesser 7 ständig mit einer gleichbleibenden Kraft von 10 kN gegen die Speisewalze 2 gefahren wird. Bei Erhöhung der Spaltkraft auf z.B. 70 kN, wird von dem Elektromagnet eine entsprechende Gegenkraft aufgebracht, so daß die Kraft zwischen Messer und Walze auf den konstanten Wert von 10 kN gehalten wird.

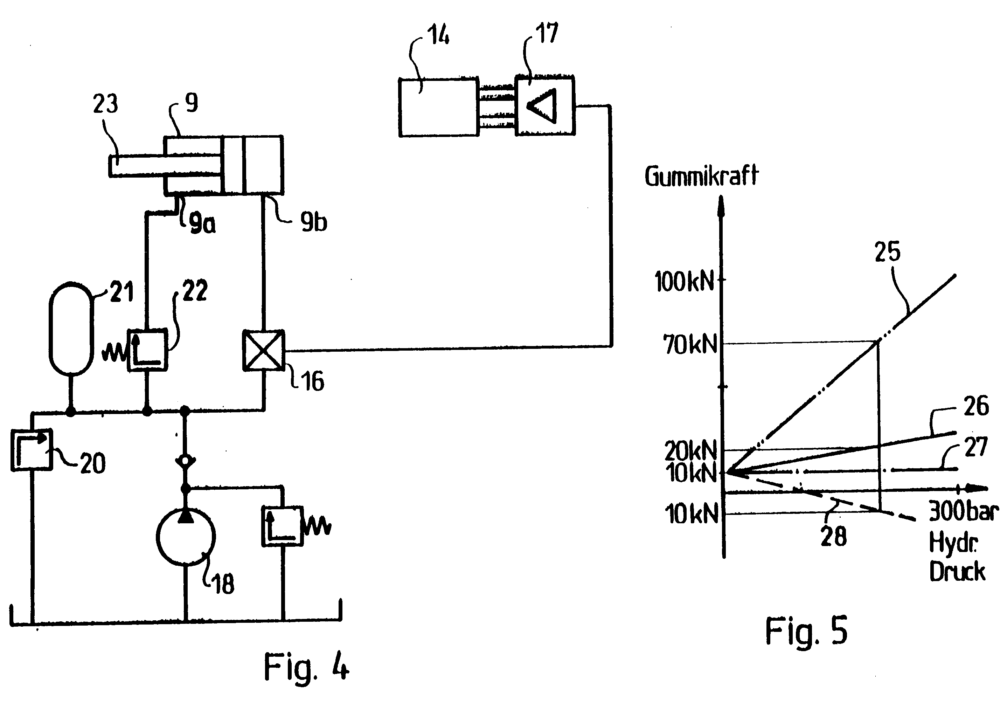

In Fig. 4 wird anhand eines Hydraulikplanes die Wirkungsweise der Einrichtung zum Konstanthalten des Anpreßdruckes bzw. des Abstandes des Messers 7 gegen die Speisewalze dargestellt.

Wenn zwischen der Schnecke 1 und der Speisewalze 2 z. B. Kautschuk eingezogen wird, entsteht in dem Spalt eine Separationskraft, die mittels der auf dem Zuganker 11 angeordneten Kraftmeßdose 14 gemessen wird.

Die durch die Kraftmeßdose 14 gemessene Spaltkraft zwischen der Schnecke 1 und der über das Scharnier 5 beweglich in der Aufnahmeeinrichtung 13 gelagerten Speisewalze 2 wird durch einen elektrischen Verstärker 17 verstärkt und an ein Proportionalventil 16 für die Steuerung des Hydraulikzylinders 9 gegeben.

Durch die Hydraulikpumpe 18 wird ein Druck erzeugt, der mittels des Druckbegrenzungsventiles 20 reduziert und in einen Speicher 21 gegeben wird.

Vom Speicher 21, der z.B. einen Druck von 300 bar aufweist, wird dann über ein Druckminderventil 22 ein konstanter Druck von z.B. 20 bar auf die Kolbenstangenseite des Hydraulikzylinders 9 gegeben.

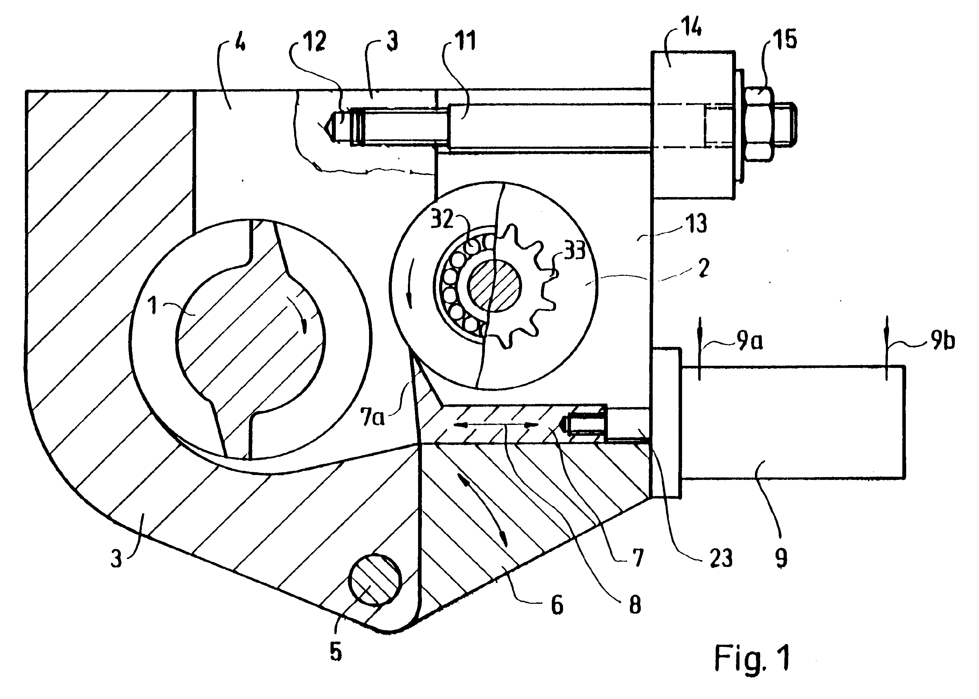

Die Kolbenstange 23 des Hydraulikzylinders 9 ist mit dem Abstreifmesser 7 (Fig. 1) verbunden. Durch die Beaufschlagung des Anschlusses 9a des Hydraulikzylinders mit dem Druck (20 bar) wird erreicht, daß das Abstreifmesser ständig mit exakt 20 bar gegen den Speisewalzenmantel gepreßt bzw. gezogen wird.

Wenn ein Materialdruck von z.B. 200 bar, der zwischen der Extruderschnecke 1 und der Speisewalze 2 wirkt, sich anteilig auf die Fläche 7a des Abstreifmessers 7 fortpflanzt, wird auf den Leitungsanschluß 9b des Hydraulikzylinders 9 ein Hydraulikgegendruck gegeben, der einem Kautschukdruck von z.B. 180 bar (auf das Abstreifmesser) entspricht, so daß das Abstreifmesser mit einem konstanten Druck von 20 bar gegen den Speisewalzenmantel gepreßt wird. Bei einer Erhöhung der gemessenen Spaltkraft, d. h. des Kautschukdruckes, wird auch der hydraulische Gegendruck auf den Leitungsanschluß 9b im Hydraulikzylinder 9 entsprechend erhöht.

Da die gemessene Separationskraft zwischen der Schnecke und der Speisewalze proportional zur Kraft ist die auf die Fläche 7a des Abstreifmessers einwirkt, wird auch der Druck des Hydraulikzylinders 9 proportional durch das Ventil 16 gesteuert.

Die graphische Darstellung in Fig. 5 zeigt die proportionalen Druckverhältnisse auf. Durch die Kurve 25 wird die Materialkraft dargestellt, die auf die Speisewalze durch die Einzugsarbeit des Kautschuks einwirkt, z.B. 70 kN.

Die auf die Messerfläche 7a einwirkende Kraft ist entsprechend geringer und wird durch die Kurve 26 dargestellt, z.B. 20 kN. Auf das Abstreifmesser wird mittels des Hydraulikzylinders 9 ein Gegendruck gegeben (Kurve 28), so daß sich eine konstante Kraft zwischen Messer und Walze von z.B. 10 kN aufbaut. Durch die Kurve 27 wird die konstante Kraft in diesem Beispiel von 10 kN dargestellt.

Durch obige graphische Darstellung wird deutlich, daß mittels der erfindungsgemäßen Lehre die Anstellkraft des Abstreifmessers 7 gegen die Speisewalze 2 bei allen Druck- bzw. Kraftverhältnissen, die zwischen der Schnecke und der Speisewalze auftreten, und sich ständig ändern, konstant gehalten wird.

**Patentansprüche**

1. Verfahren zum Konstanthalten der Anstellkraft eines Abstreifmessers (7) am Mantel einer Speisewalze (2), die im Einzugsbereich eines Extruders für die Verarbeitung von Kautschuk oder thermoplastische Kunststoffe angeordnet ist und mit der Extruderschnecke (1) zusammenwirkt,
   **dadurch gekennzeichnet,**
   daß die Materialspaltkraft zwischen der Speisewalze (2) und der Extruderschnecke (1) gemessen wird, und
   daß in Abhängigkeit der gemessen Werte der Materialspaltkraft die Anstellkraft des Abstreifmessers (7) gegen den Mantel der Speisewalze (2) konstant gehalten wird.

2. Verfahren nach Anspruch 1,
   **dadurch gekennzeichnet,**
   daß die Ansteilkraft des Abstreifmessers (7) als ein konstanter Wert mittels einer, mit einem auf das Abstreifmesser einwirkenden Hydraulikzylinder (9) verbundenen Steuereinrichtung eingestellt wird.

3. Verfahren nach den Ansprüchen 1 und 2,
   **dadurch gekennzeichnet,**
   daß die Anstellkraft des Abstreifmessers als ein konstanter Wert durch ein, mit der Druckseite eines auf das Abstreifmesser einwirkenden Hydraulikzylinders verbundenes Proportionalventil (16) eingestellt wird.

4. Vorrichtung zur Durchführung des Verfahrens nach den Patentansprüchen 1 - 3 an einem Extruder für die Verarbeitung von Kautschuk und thermoplastischem Kunststoff mit einem Einzugsteil, in dem eine mit einer Schnecke (1) zusammenwirkende angetriebene Speisewalze (2) angeordnet ist, mit einer Aufnahmeeinrichtung (13) für die Speisewalze (2), die um ein Scharnier (5) verschwenkbar ausgebildet ist und mit einem gegen den Mantel der Speisewalze (2) anstellbaren Abstreifmesser (7),
   **dadurch gekennzeichnet,**
   daß die Aufnahmeeinrichtung (13) für die Speisewalze (2) mittels eines oder mehrerer Zuganker (11) mit dem Extrudergehäuse (3) verbunden ist, daß auf dem(n) Zuganker(n) (11), die Materialseparationskraft zwischen der Schnecke (1) und der Speisewalze (2) messende Kraftmeßdose(n) angeordnet ist (sind), daß die Kraftmeßdose(n) mit einer Steuereinrichtung (10) oder mit einem Proportionalventil (16) verbunden ist (sind), und daß die Steuereinrichtung (10) oder das Proportionalventil (16) mit einer, daß Abstreifmesser (7) gegen den Mantel der Speisewalze (2) fahrenden Einrichtung (9, 29, 30, 31) verbunden ist.

5. Vorrichtung nach Anspruch 4,
   **dadurch gekennzeichnet,**
   daß die Einrichtung zum Verfahren des Abstreifmessers (7) als Hydraulikzylinder (9), als Spindeltrieb (29, 30), als Pneumatikzylinder oder als ansteuerbarer Elektromagnet (31) ausgebildet ist.

6. Vorrichtung nach Anspruch 4,
   **dadurch gekennzeichnet,**
   daß die Aufnahmeeinrichtung (13) für die Speisewalze (2) gebildet wird durch eine, um ein Scharnier (5) verschwenkbare, die Speisewalze (2), die Lagerung (32) und den Antrieb (33) der Speisewalze (2) aufnehmende Konsole.

**Claims**

1. Method of maintaining the force constant at which a scraper knife (7) is set against the shell of a feed roll (2) that is arranged in the intake zone of an extruder for processing rubber or thermoplastic material and that cooperates with the extruder screw (1),
   **characterized in that**
   the separating force of the material between the feed roll (2) and the extruder screw (1) is measured, and
   that the force at which the scraper knife (7) is set against the shell of the feed roll (2) is kept constant in dependence on the measured values of the separating force of the material.

2. Method as per claim 1,
**characterized in that**
the setting force of the scraper knife (7) is set as a constant value by means of a control device, which is linked with a hydraulic cylinder (9) that acts on the scraper knife.

3. Method as per claims 1 and 2
**characterized in that**
the setting force of the scraper knife is set as a constant value by means of a proportional valve (16) that is linked with the pressure side of a hydraulic cylinder that acts on the scraper knife.

4. Device for applying the method as per patent claims 1 to 3 on an extruder suited for processing rubber and thermoplastic material and provided with an intake section comprising a driven feed roll (2) that cooperates with a screw (1), a take-up device (13) for the feed roll (2) that can be swivelled by means of a hinge (5), and a scraper knife (7) that can be set against the shell of the feed roll (2),
**characterized in that**
the take-up device (13) for the feed roll (2) is linked with the extruder housing (3) via one or several tie rods (11),
a load cell(s) for measuring the separating force of the material between the screw (1) and the feed roll (2) is (are) arranged on the tie rod(s),
the load cell(s) is (are) linked with a control device (10) or a proportional valve (16), and
the control device (10) or the proportional valve (16) is connected with a unit (9, 29, 30, 31) that moves the scraper knife (7) against the shell of the feed roll (2).

5. Device as per claim 4,
**characterized in that**
the device for displacing the scraper knife (7) is designed as a hydraulic cylinder (9), a spindle drive (29, 30), a pneumatic cylinder or a controllable electromagnet (31).

6. Device as per claim 4,
**characterized in that**
the take-up device (13) for the feed roll (2) is designed as a bracket that can be swivelled around a hinge (5) and supports the feed roll (2), the bearing (32), and the drive (33) of the feed roll (2).

**Revendications**

1. Procédé pour maintenir constante la force d'appui d'un couteau racleur (7) contre la chemise d'un galet bourreur (2), qui est disposé dans la zone d'alimentation d'une extrudeuse pour la transformation de caoutchouc ou de thermoplastiques et qui fonctionne en combinaison avec une vis d'extrudeuse (4),
**caractérisé**
en ce que la force se produisant dans l'écartement entre le galet bourreur (2) et la vis d'extrudeuse (1) est mesurée et
en ce qu'en fonction des valeurs mesurées de la force se produisant dans l'écartement, la force d'appui du couteau racleur (7) contre la chemise du galet bourreur (2) est maintenue constante.

2. Procédé selon revendication 1,
**caractérisé**
en ce que la force d'appui du couteau racleur (7) est ajustée comme valeur constante au moyen d'un appareil de commande lié à un vérin hydraulique (9) agissant sur le couteau racleur.

3. Procédé selon les revendication 1 et 2,
**caractérisé**
en ce que la force d'appui du couteau racleur est ajustée comme valeur constante au moyen d'une valve à action proportionnelle (16) liée à un vérin hydraulique sur le côté pression agissant sur le couteau racleur.

4. Appareil pour la réalisation du procédé selon les revendications 1 - 3 sur une extrudeuse pour la transformation de caoutchouc ou d'un thermoplastique, l'extrudeuse comportant une zone d'alimentation, dans laquelle est montée un galet bourreur (2) fonctionnant en combinaison avec une vis d'extrudeuse (1) avec un dispositif de support (13) pour le galet bourreur (2) qui est pivotable au moyen d'une charnière (5) et avec un couteau racleur (7) ajustable par rapport à la chemise du galet bourreur (2),
**caractérisé**
en ce que le dispositif de support (13) pour le galet bourreur (2) est lié au moyen d'un ou plusieurs tirant(s) d'ancrage (11) avec le carter de l'extrudeuse (3),
en ce qu'une (des) boîte(s) dynamométrique(s) est (sont) arrangé(s) sur le(s) tirant(s) d'ancrage (11) pour mesurer la force de séparation entre la vis (1) et le galet bourreur (2),
en ce que la (les) boîte(s) dynamométrique(s) est (sont) reliée(s) à un dispositif de commande (10) ou une valve à action proportionnelle (16), et en ce que le dispositif de commande (10) ou la valve à action proportionnelle (16) est lié(e) à un dispositif (9, 29, 30, 31) déplaçant le couteau racleur (7) contre la chemise du galet bourreur (2).

5. Appareil selon revendication 4,
**caractérisé**

en ce que le dispositif pour déplacer le couteau racleur (7) est conçu comme vérin hydraulique (9), entraînement à broche (29, 30), vérin pneumatique ou comme électro-aimant (31) à pilotage.

6.　Appareil selon revendication 4,
　　　　**caractérisé**
　　　　en ce que le dispositif de support (13) pour le galet bourreur (2) est conçu comme console pivotable autour d'une charnière (5), qui reçoit le galet bourreur (2), le logement (32) et l'entraînement (33) du galet bourreur (2).

Fig. 1

Fig. 2

Fig. 3

Fig. 5

Fig. 4